# EUROPEAN PATENT APPLICATION

(11) **EP 2 289 777 A1**
(43) Date of publication of application: **02.03.2011**
(21) Application number: 10171456.6
(22) Date of filing: 30.07.2010
(51) Int. Cl.: B62H 3/12

(54) **Support for bicycle**

(30) Priority: 31.08.2009 IT PD20090247
(71) Applicant: Peruzzo, Paola, 36027 Rosa' VI (IT)
(72) Inventor: Peruzzo, Paola, 36027 Rosa' VI (IT)
(74) Representative: Modiano, Micaela Nadia

(57) **Abstract**

A support (10), particularly for bicycles and the like, which comprises
- a frame (11) equipped with means (12) for fixing to a wall (13) and provided with at least two substantially parallel posts (14), to be arranged substantially vertically during use,
- arms (15) provided, at one end, with a fork (16) for connection to the posts (14),
- means (17) for the articulation of the forks (16) to the posts (14) that they straddle, the means (17) forming a tilting axis (A,A^{I}) for the arms (15), the posts (14) having, in corresponding positions, a plurality of seats (18) for connection to the articulation means (17), the seats being adapted to be engaged alternately by them.
The arms (15) are connected to the posts (14) by way of the articulation means (17) so as to tilt by rotation about the tilting axis (A,A^{I}) in order to pass
- from an inactive configuration, in which the arms (15) are folded onto the posts (14),
- to an active configuration, in which the arms (15) are arranged substantially at right angles to the posts (14),
- and vice versa.

## Description

The present invention relates to a support, particularly for bicycles and the like.

Wall-mounted supports for bicycles are currently known which have a frame that supports hooks on which bicycles are hung at the wheels or crossbar.

These structures are fixed and protrude from the wall to which they are fixed by means of a beam from which the hooks hang.

Therefore, even when no bicycles are hung on them, these supports occupy the space assigned to them when in use.

In order to meet the requirement of ever less bulky supports, supports are currently known which are formed by a frame provided by means of a U-shaped portion of metallic tube which is fixed to the wall, to the lower end of which a fork is pivoted so that it can rotate in order to pass from a configuration in which it is folded onto the frame to a configuration in which the arms of the fork are substantially perpendicular to the wall to which the support is fixed, in order to be able to arrange the bicycle to be supported so that it straddles the support.

This type of support is currently provided in models that differ substantially in the shape of the fork, which can be provided by means of a U-shaped element made of metallic tube, so that its arms are monolithic, or can be provided by means of two independent tubes which are pivoted to the frame.

The need to have a support that can be adapted to the type of bicycle to be supported and to be able to lock the fork stably and safely in the configuration in which it is folded onto the frame are currently felt in the field of wall-mounted supports for bicycles and are not met by currently known supports.

The aim of the present invention is to meet the above requirements, by providing a support that can be adapted to the object to be supported.

Within this aim, an object of the invention is to propose a support that allows to arrange repeatably its arms in different configurations, which are adapted to support the object to be supported.

Another object of the invention is to provide a support which, when not in use, can be more compact than when it is in use.

A further object of the invention is to propose a support that allows to lock its arms stably and safely, particularly when it is not in use.

A still further object of the invention is to provide a support that is structurally simple and easy to use and can be manufactured with low costs.

This aim and these and other objects that will become better apparent hereinafter are achieved by a support, particularly for bicycles and the like, **characterized in that** it comprises
- a frame equipped with means for fixing to a wall and provided with at least two substantially parallel posts, to be arranged substantially vertically during use,
- arms provided, at one end, with a fork for connection to said posts,
- means for the articulation of said forks to said posts that they straddle, said means forming a tilting axis for said arms, said posts having, in corresponding positions, a plurality of seats for connection to said articulation means, said seats being adapted to be engaged alternately by them,
   said arms being connected to said posts by way of said articulation means so as to tilt by rotation about said tilting axis in order to pass
- from an inactive configuration, in which said arms are folded onto said posts,
- to an active configuration, in which said arms are arranged substantially at right angles to said posts,
- and vice versa.

Further characteristics and advantages of the invention will become better apparent from the following detailed description of a preferred but not exclusive embodiment of the support according to the invention, illustrated by way of non-limiting example in the accompanying drawings, wherein:
Figure 1 is a perspective view of a support according to the invention in an active configuration;
Figure 2 is a perspective view of the support according to the invention in a further active configuration;

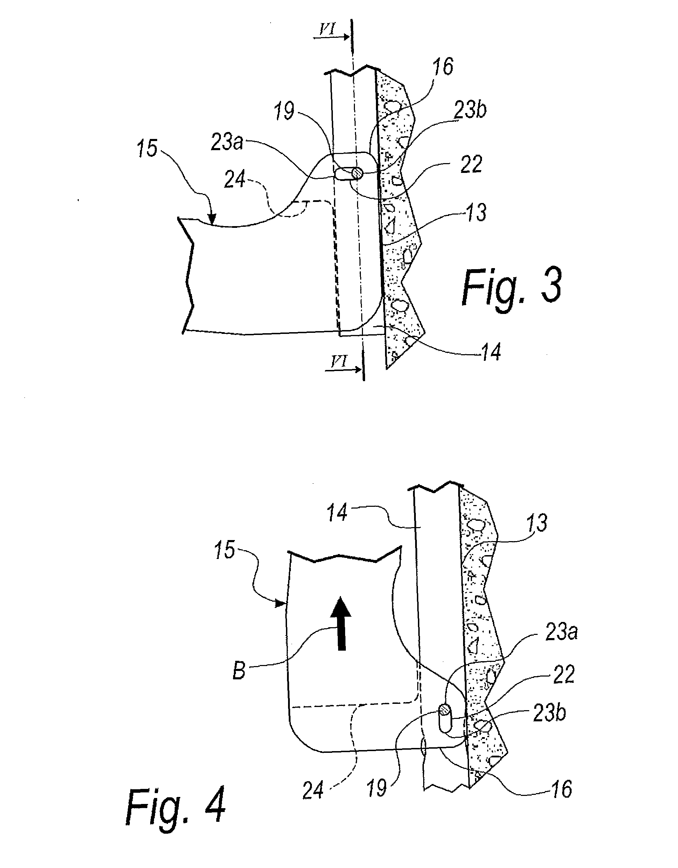

Figures 3 and 4 are enlarged-scale and partially sectional perspective views of detail of the support according to the invention, respectively in an active configuration and in an inactive configuration;
Figure 5 is a side elevation view of the support according to the invention in an inactive configuration;
Figure 6 is a sectional view of the support according to the invention, taken along the line VI-VI of Figure 3.

It is noted that anything found to be already known during the patenting process is understood not to be claimed and to be the subject of a disclaimer.

With reference to the figures, the reference numeral 10 generally designates a support, particularly for bicycles and the like, that comprises:
- a frame 11 equipped with means 12 for fixing to a wall 13 and provided with at least two substantially parallel posts 14, to be arranged substantially vertically during use,
- arms 15 provided, at one end, with a fork 16 for connection to the posts 14,
- means 17 for the articulation of the forks 16 to the posts 14 that they straddle, such means forming a tilting axis A for the arms 15.

The posts 14 have, in corresponding positions, a plurality of seats 18 for connection to the articulation means 17, such seats being adapted to be engaged alternately by them.

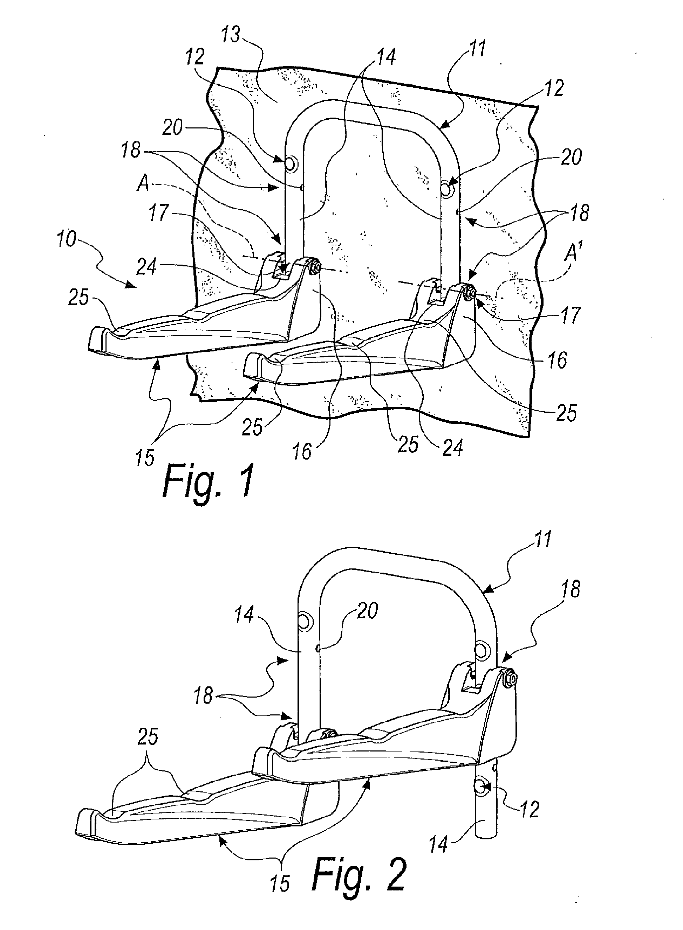

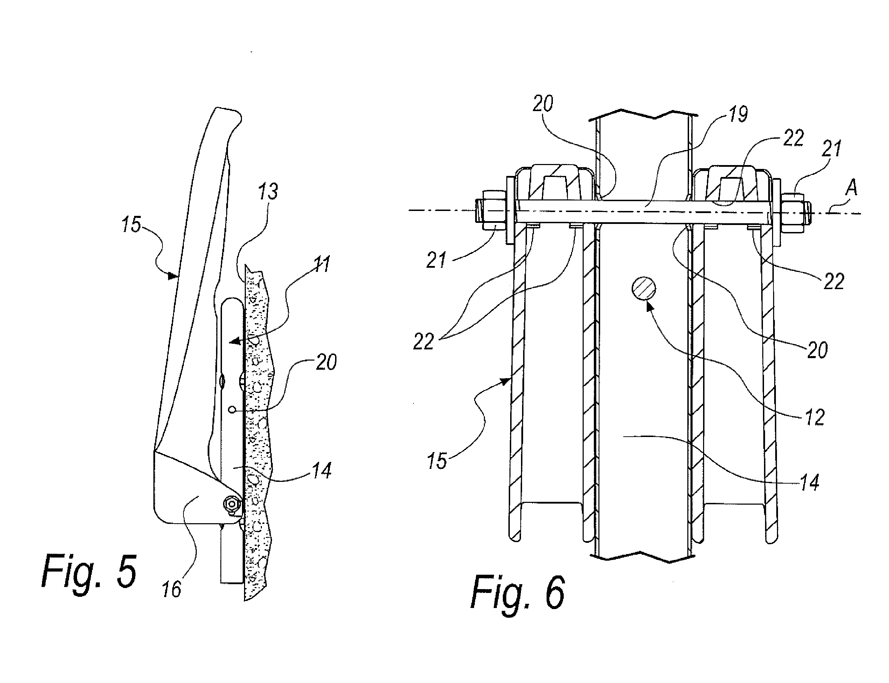

The arms 15 are connected to the posts 14 by way of the articulation means 17 so as to tilt, by rotation about tilting axes A, A^{I}, in order to pass
- from an inactive configuration, in which the arms 15 are folded onto the posts 14, as shown by way of non-limiting example in Figure 5,
- to an active configuration, in which the arms 15 are arranged substantially at right angles to the posts 14, as shown by way of non-limiting example in Figures 1 and 2,
- and vice versa.

Advantageously, the articulation means 17 comprise pivots 19, the connection seats 18 being formed by transverse holes 20 that pass through the posts 14.

The holes 20 are shaped so as to receive by insertion the pivots 19, and their axis, which substantially coincides during use with the axis of the pivots 19 inserted therein, defines one of the tilting axes A, A^{I}.

In particular, the pivots 19 are provided preferably by means of stud bolts with locking nuts 21 at the ends.

In a substantially equivalent manner, bolts or the like can be used instead of the stud bolts.

The forks 16 conveniently have facing through slots 22 adapted to receive the ends of the pivots 19 by through insertion.

The slots 22 are extended within the forks 16 in a direction that is substantially parallel to the longitudinal direction of the arms 15.

In such inactive and active configurations, the pivots 19 engage the opposite ends 23a and 23b of the slots 22.

Further, the arms 15 advantageously have a beveled step 24 for locking against the posts 14, which is provided in the forks 16.

In such inactive configuration
- the step 24 is locked against the post 14 to which it is pivoted, to contrast the rotation of the arm 15 about the tilting axis A or A^{I}, and
- the pivot 19 engages the first end 23a of the slots 22 in which it passes.

A configuration for free rotation of the arms 15 is defined in which
- the arms 15 are folded onto the posts 14 and
- the pivots 19 engage the second ends 23b of the slots 22, which lie opposite the first ends 23a.

Thus, in order to allow the rotation of the arms 15 from the inactive configuration to the active configuration, it is necessary to impart a translational motion B to the arms 15 along the posts 14, so as to make the pivots 19 slide in the slots 22 so that they pass from abutment against the first end 23a to abutment against the second end 23b, which corresponds to such free configuration, in which the step 24 does not lock against the post 14, allowing the rotation of the arm about the tilting axis A or A^{I}.

Moreover, conveniently the arms 15 have, on their face that during use is directed upward, notches 25 that form preferential seats for items to be supported.

Further, preferably the frame 11 is made of metal tubing, which is conveniently shaped substantially like an inverted letter U, the arms of which form the posts 14.

The arms 15 are preferably made of plastics and/or the fixing means 12 are conveniently expansion screw anchors.

In general, according to the invention, depending on requirements, it is possible to associate on each post 14 a plurality of arms 15 which, paired with corresponding arms 15 pivoted on the other post 14, form bicycle supporting forks, which can be supported for example by the arms 15 by resting on them with the crossbar on the notches 25.

The use of a support according to the invention is as follows.

Once the frame 11 has been fixed to the wall 13 by way of the fixing means 12, the operator associates the arms 15 with the frame 11 in the preferred configuration for use, pivoting the forks 16 to the posts 14 by insertion of the pivots 19 in the holes 20 and in the slots 22, and locking them thereat, for example by means of the nuts 21, the pivots 19 being stud bolts.

Thus, the arms 15 can be arranged at the same height on the posts 14 or offset, as shown for example in a non-limitative manner respectively in Figures 1 and 2.

The arms can be turned, even independently, about the tilting axes A or A^{I}, in order to arrange them in the active configuration or in the inactive configuration.

When they are in the inactive configuration, the arms 15 are locked to the posts 14, their step 24 being locked against them to contrast rotation about the tilting axis, so as to avoid accidental transition to the active configuration.

For transition to the active configuration, in fact, as already described, the user has to lift the arms 15 along the posts 14, making them perform the translational motion B, so as to move them into the free configuration, from which they can be rotated about the tilting axis A or A^{I}, and thus arranged in the active configuration.

In practice it has been found that the invention achieves the intended aim and objects, providing a support that can be adapted to the item to be supported, since it is possible to arrange repeatably the arms so that they are aligned or offset on the frame.

Further, a support according to the invention, when it is not in use, can have a reduced space occupation with respect to when it is in use, simply by folding the arms onto the frame, where they are further locked stably and safely.

Moreover, a support according to the invention is structurally simple and easy to use and can be manufactured with low costs.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the contingent shapes and dimensions, may be any according to requirements and to the state of the art.

The disclosures in Italian Patent Application No. PD2009A000247 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A support (10), particularly for bicycles and the like, **characterized in that** it comprises
- a frame (11) equipped with means (12) for fixing to a wall (13) and provided with at least two substantially parallel posts (14), to be arranged substantially vertically during use,
- arms (15) provided, at one end, with a fork (16) for connection to said posts (14),
- means (17) for the articulation of said forks (16) to said posts (14), said means (17) forming a tilting axis (A, A^{I}) for said arms (15), said means (17) straddling said posts (14) having, in corresponding positions, a plurality of seats (18) for connection to said articulation means (17), said seats being adapted to be engaged alternately by them,
said arms (15) being connected to said posts (14) by way of said articulation means (17) so as to tilt by rotation about said tilting axis (A, A^{I}) in order to pass
- from an inactive configuration, in which said arms (15) are folded onto said posts (14),
- to an active configuration, in which said arms (15) are arranged substantially at right angles to said posts (14),
- and vice versa.

2. The support according to claim 1, **characterized in that** said articulation means (17) comprise pivots (19), said connection seats (18) being formed by transverse holes (20) that pass through said posts (14), said holes (20) being shaped so as to receive by insertion said pivots (19), the axis of said holes (20), which substantially coincides during use with the axis of said pivots (19) inserted therein, defining said tilting axis (A, A^{I}).

3. The support according to claim 2, **characterized in that** said pivots (19) are provided selectively between bolts and stud bolts with locking nuts (21) at the ends.

4. The support according to one or more of the preceding claims, **characterized in that** said forks (16) have facing through slots (22) adapted to receive the ends of said pivots (19) by through insertion, said slots (22) being longitudinally extended within said forks (16) in a direction that is substantially parallel to the longitudinal direction of said arms (15), said pivots (19) in said configurations engaging opposite ends (23a, 23b) of said slots (22).

5. The support according to claim 4, **characterized in that** said arms (15) have a beveled step (24) for locking against said posts (14) which is provided in said forks (16), in said inactive configuration said step (24) being locked against said post (14) to contrast the rotation of said arm (15) about said tilting axis (A, A^{I}), and said pivot (19) engaging a first end (23a) of said slots (22) in which it passes, a configuration for free rotation of said arm (15) being defined in which said arms (15) are folded onto said posts (14) and said pivots (19) engage a second end (23b) of said slots (22), which lies opposite said first end (23a).

6. The support according to one or more of the preceding claims, **characterized in that** said arms (15) have, on their face that during use is directed upward, notches (25) that form preferential seats for items to be supported.

7. The support according to one or more of the preceding claims, **characterized in that** said frame (11) is made of metal tubing.

8. The support according to claim 7, **characterized in that** said metal tubing is shaped substantially like an inverted letter U, the arms of which form said posts (14).

9. The support according to one or more of the preceding claims, **characterized in that** said arms (15) are made of plastics.

10. The support according to one or more of the preceding claims, **characterized in that** said fixing means (12) are expansion screw anchors (12).
